# EUROPÄISCHE PATENTSCHRIFT

(11) **EP 4 320 409 B1**
(45) Veröffentlichungstag und Bekanntmachung des Hinweises auf die Patenterteilung: **10.12.2025**
(21) Anmeldenummer: 23704901.0
(22) Anmeldetag: 09.02.2023
(51) Int. Cl.: G01C 25/00

(54) **VERFAHREN ZUR KALIBRIERUNG UND BESTIMMUNG VON POSITIONSDATEN EINER INERTIALEN MESSEINHEIT, TRAININGSSYSTEM UND MEDIZINISCHES INSTRUMENT MIT EINER INERTIALEN MESSEINHEIT**
METHOD FOR CALIBRATING AND DETERMINING POSITION DATA OF AN INERTIAL MEASUREMENT UNIT, TRAINING SYSTEM, AND MEDICAL INSTRUMENT COMPRISING AN INERTIAL MEASUREMENT UNIT
PROCÉDÉ D'ÉTALONNAGE ET DE DÉTERMINATION DE DONNÉES DE POSITION D'UNE UNITÉ DE MESURE INERTIELLE, SYSTÈME D'ENTRAÎNEMENT ET INSTRUMENT MÉDICAL COMPRENANT UNE UNITÉ DE MESURE INERTIELLE

(30) Priorität: 11.02.2022 DE 102022103249
(43) Veröffentlichungstag der Anmeldung: 14.02.2024
(73) Patentinhaber: B. Braun New Ventures GmbH, 79110 Freiburg im Breisgau (DE)
(72) Erfinder: STAWIASKI, Jean, 79199 Kirchzarten (DE)
(74) Vertreter: Winter, Brandl - Partnerschaft mbB
(86) Internationale Anmeldenummer: PCT/EP2023/053186
(87) Internationale Veröffentlichungsnummer: WO 2023/152217

(56) Entgegenhaltungen:
- KIM YOUNG-HO ET AL: "A Wide-Area, Low-Latency, and Power-Efficient 6-DoF Pose Tracking System for Rigid Objects", IEEE SENSORS JOURNAL, IEEE, USA, vol. 22, no. 5, 20 January 2022 (2022-01-20), pages 4558 - 4568, XP011901562, ISSN: 1530-437X, [retrieved on 20220225], DOI: 10.1109/JSEN.2022.3144957
- KIM YOUNG-HO ET AL: "A Wide-Area, Low-Latency, and Power-Efficient 6-DoF Pose Tracking System for Rigid Objects", IEEE SENSORS JOURNAL, vol. 22, no. 5, 19 January 2022 (2022-01-19), USA, pages 4558 - 4568, XP093234555, ISSN: 1530-437X, Retrieved from the Internet <URL:https://arxiv.org/pdf/2109.07428> DOI: 10.1109/JSEN.2022.3144957
- ELLINOR CLAESSON ET AL: "Calibration of IMUs using Neural Networks and Adaptive Techniques -Targeting a Self-Calibrated IMU Master's thesis in System, Control and Mechatronics", 1 June 2019 (2019-06-01), XP055724659, Retrieved from the Internet <URL:https://odr.chalmers.se/bitstream/20.500.12380/256912/1/256912.pdf> [retrieved on 20200824]
- BROSSARD MARTIN ET AL: "Denoising IMU Gyroscopes With Deep Learning for Open-Loop Attitude Estimation", IEEE ROBOTICS AND AUTOMATION LETTERS, IEEE, vol. 5, no. 3, 17 June 2020 (2020-06-17), pages 4796 - 4803, XP011796693, DOI: 10.1109/LRA.2020.3003256
- ZHANG YINLONG ET AL: "Monocular Visual-Inertial and Robotic-Arm Calibration in a Unifying Framework", IEEE/CAA JOURNAL OF AUTOMATICA SINICA, CHINESE ASSOCIATION OF AUTOMATION (CAA), vol. 9, no. 1, 20 October 2021 (2021-10-20), pages 146 - 159, XP011883819, ISSN: 2329-9266, [retrieved on 20211020], DOI: 10.1109/JAS.2021.1004290

## Beschreibung

### Technisches Gebiet

Die vorliegende Offenbarung betrifft ein Verfahren zum Trainieren und Kalibrieren und zur Vorhersage bzw. Bestimmung von zumindest einer Position bzw. von Positionsdaten einer Inertialen Messeinheit. Daneben betrifft die vorliegende Offenbarung ein Trainingssystem mit einer Inertialen Messeinheit und ein computerlesbares Speichermedium gemäß den Oberbegriffen der nebengeordneten Ansprüche.

Bei endoskopischen Operationen stellt die Navigation innerhalb eines Körpers eines Patienten eine große Herausforderung dar. Optische Navigationssysteme mit einem optischen Trackingsystem etwa weisen nur eine begrenzte Sicht auf und verlieren bei Unterbrechung einer Sichtlinie zum nachverfolgten Objekt ihre Funktion einer Positions- oder Lagebestimmung. Darüber hinaus sind Limitierungen hinsichtlich einer adäquaten Ergonomie bei eingesetzten Instrumente gegeben, welche beispielsweise durch sperrige Tracker bedingt sind. Folglich eignen sich optische Navigationssysteme sehr schlecht für den Einsatz bei endoskopischen Operationen.

Es gibt Anstrengungen dahingehend, Inertiale Messeinheiten (eng. inertial measurement units, kurz: IMU) für eine Navigation im Bereich der Medizintechnik einzusetzen. Inertiale Messeinheiten haben den entscheidenden Vorteil, dass diese keine Sichtprobleme mit sich bringen und in verschiedene Systeme oder Produkte integriert werden können, ohne eine Ergonomie dieser Produkte überaus negativ zu beeinflussen.

Inertiale Messeinheiten weisen jedoch weiterhin signifikante Nachteile auf, die aktuell einen Einsatz in einer chirurgischen Umgebung verhindern oder zumindest stark erschweren. Inertiale Messeinheiten erlauben zwar, die Beschleunigung und die Orientierung bzw. Drehraten zu erfassen, stellen dabei jedoch keine globalen, absoluten Positionsinformationen zur Verfügung. Gemäß mathematischer Theorie kann aus den durch die Inertiale Messeinheit (nachstehend nur IMU genannt) gemessenen Beschleunigungsdaten durch zweifaches Integrieren die relative Position der IMU gegenüber einer Anfangs-/ Startposition berechnet werden. Die Berechnung der Position aus Beschleunigungsdaten durch Integration ist aber Messfehlern gegenüber sehr sensitiv, da sich die Fehler zeitlich gesehen weiter fortsetzen und sogar verstärken. Ein geringer Fehler zu Anfang der Messung verstärkt sich über den Weg der IMU hinweg. Es hat sich also gezeigt, dass die doppelte Integration von Beschleunigungsdaten mit der Zeit zu wesentlichen Fehlern in der Positionsbestimmung führt. Darüber hinaus sind Orientierungsdaten auch abhängig von einer Kalibrierung der Sensoren und weiteren Störeinwirkungen. Diese Einwirkungen erschweren eine hohe Genauigkeit der Orientierungsmessungen.

Im Bereich der Medizintechnik spielen insbesondere Kosten und Baugröße eine entscheidende Rolle. Eine große und relativ gesehen präzise inertiale Messeinheit, wie sie etwa im Bereich der Luftfahrt Verwendung findet, scheidet für einen Einsatz bei einem chirurgischen Eingriff aus. Insbesondere sind Halbleitersensoren als inertiale Messeinheiten von Interesse, da diese klein aufbauen und kostengünstig sind. Jedoch sind beschleunigungsbasierte Positions- und Geschwindigkeitsschätzungen von günstigen Sensoren im Allgemeinen sehr fehleranfällig. Dies rührt unter anderem daher, dass eine Orientierung der Sensoren sehr genau bestimmt sein muss, um Einwirkungen der Schwerkraft von einer tatsächlichen physischen Beschleunigung der Sensoren unterscheiden zu können. Selbst kleine Fehler in der Orientierungsschätzung führen zu hohen Fehlern in der gemessenen Beschleunigung. Diese Fehler führen durch die doppelte Integration zu noch größeren Fehlern in der Positionsschätzung.

Ohne weitere externe Sensoren ist es oft nicht möglich, eine genaue Positionsschätzung vorzunehmen. Die Beschleunigungssensoren messen sowohl die physische Beschleunigung als auch den Einfluss von Normalkräften, die von der Erdanziehung bedingt sind. Daher weisen die Bewegungsdaten zwingend einen Einfluss der Erdbeschleunigung auf. Ferner wird die Integration mithilfe eines finiten Zeitschrittes durchgeführt, was darüber hinaus eine präzise determinierte Zeitmessung benötigt.

Da eine Positionsbestimmung nur durch Integration von Bewegungsdaten einer IMU keine ausreichende Genauigkeit liefert, schlägt der Stand der Technik vor, die Bewegungsdaten der IMU mit weiteren Daten zu ergänzen.

Es ist aus dem Stand der Technik bekannt, Algorithmen als Filter einzusetzen, um Daten zu kalibrieren oder zu glätten. Aus aktueller Forschung aus einem fachfremden Gebiet ist beispielsweise bekannt, ein Fahrzeug mit einer IMU auszustatten. Die IMU erfasst Bewegungsdaten während der Fahrt des Fahrzeugs. Gleichzeitig wird die (globale) Position des Fahrzeugs durch GPS getrackt, sodass eine redundante Erfassung vorliegt. Auch ist aus dem Stand der Technik bekannt, Kalman-Filter für eine Schätzung und Glättung einer IMU heranzuziehen.

Aus "Calibration of IMUs using Neural Networks and Adaptive Techniques" - Claesson et al ist ein Kalibrierungsverfahren einer IMU durch ein neuronales Netz bekannt. Für einen Trainingsdatensatz werden Beschleunigungsdaten der IMU durch einen Beschleunigungssensor gemessen. Mithilfe eines Roboters kann die IMU präzise ausgerichtet werden. Durch die präzise Ausrichtung kann der Einfluss der Erdbeschleunigung aus den Messwerten herausgerechnet werden und somit die "wahre" Beschleunigung ermittelt werden. Der Trainingsdatensatz setzt sich somit aus der gemessenen Beschleunigung als Eingangswert und der wahren Beschleunigung als Ausgangswert zusammen.

Es ist aus dem Stand der Technik aber keine Möglichkeit bekannt, eine IMU individuell zu kalibrieren und eine präzise Position einer IMU im Raum zu berechnen und zu bestimmen bzw. vorherzusagen.

### Zusammenfassung der Offenbarung

Es ist die Aufgabe der vorliegenden Offenbarung, die Nachteile aus dem Stand der Technik zu vermeiden oder zumindest zu vermindern und insbesondere ein Verfahren, ein Trainingssystem und ein computerlesbares Speichermedium bereitzustellen, um zumindest eine Position einer IMU im Raum möglichst präzise anhand von gemessenen Bewegungsdaten zu bestimmen. Eine weitere Aufgabe ist es, ohne eine Vorgabe von mathematischen Formeln eine Verknüpfung von gemessenen Bewegungsdaten, insbesondere von gemessener Beschleunigung und gemessener Orientierung, zu zumindest Positionsdaten der IMU zu bestimmen.

Diese Aufgaben der vorliegenden Offenbarung werden hinsichtlich eines Verfahrens erfindungsgemäß durch die Merkmale des Anspruchs 1 gelöst, hinsichtlich eines Trainingssystems erfindungsgemäß durch die Merkmale des Anspruchs 9 gelöst, und hinsichtlich eines computerlesbaren Speichermediums erfindungsgemäß durch die Merkmale des Anspruchs 10 gelöst.

Ein Grundgedanke der vorliegenden Offenbarung ist also, durch ein KI-System (Künstliche Intelligenz-System) eine Verknüpfung zwischen den gemessenen (Roh- )Bewegungsdaten der Inertialen Messeinheit (IMU), insbesondere den gemessenen Beschleunigungsdaten und den gemessenen Drehraten oder der gemessenen Orientierung zu zumindest Positionsdaten herzustellen. Dafür wird das KI-System entsprechend trainiert. Das trainierte KI-Systemist schließlich in der Lage als Art Wandler zwischen einer Eingabe und einer Ausgabe, die gemessenen Bewegungsdaten als Eingabe in (zumindest) eine präzise Positionsangabe bzw. in präzise Positionsdaten der IMU als Ausgabe umzuwandeln und damit zumindest die Position vorherzusagen. Dadurch wird eine Art Kalibrierung der IMU erreicht, welche individuell gestaltbar ist und keine speziellen vorgegebenen mathematischen Formeln benötigt.

Die Aufgaben der vorliegenden Offenbarung werden also hinsichtlich eines Verfahrens zur Kalibrierung und Vorhersage von zumindest Positionsdaten einer inertialen Messeinheit (IMU) wie folgt gelöst. Das Verfahren weist speziell die folgenden Schritte auf. Die IMU wird durch ein motorisiertes System oder Aktuatorsystem aktiv entlang einer Trajektorie, insbesondere einer vordefinierten Trajektorie, im Raum bewegt. Es ändert sich also zumindest die Position der IMU, insbesondere die Position, die Orientierung und ferner vorzugsweise eine Beschleunigung, entlang der Trajektorie. Insbesondere kann die Trajektorie zu Beginn der Bewegung definiert sein, um eine Art Ziel-Trajektorie abzufahren. Die vordefinierte Trajektorie weißt eine sich ändernde Geschwindigkeit und eine sich ändernde Beschleunigung auf. Während dieser durchgeführten Bewegung werden gemessene Bewegungsdaten durch die IMU erfasst und die Bewegungsdaten an eine Steuereinheit bereitgestellt. Es wird also die IMU verwendet, um die intern gemessenen (Roh-)Bewegungsdaten entlang der Trajektorie auszulesen und der Steuereinheit bereitzustellen. Zusätzlich erfasst ein optisches Trackingsystem mit einer oder mehreren Kameras während des Bewegens entlang der Trajektorie eine Position und/oder eine Orientierung, insbesondere eine Position und eine Orientierung (also eine Lage), der IMU. Ein weiterer Schritt des Verfahrens kann vorzugsweise das Verknüpfen bzw. Zuordnen der gemessenen Bewegungsdaten zu den erfassten Positionen sein, insbesondere den Positionen und Orientierungen, um einen Trainingsdatensatz zu erhalten. Ein KI-System (Künstliche Intelligenz-System) wird mit dem Trainingsdatensatz trainiert, um ein trainiertes KI-System und damit eine IMU-Kalibrierung zu erhalten. Damit steht das trainierte KI-System für eine Anwendung mit nur einer Eingabe bereit. Schließlich werden bei dem Verfahren die gemessenen Bewegungsdaten der IMU als Eingabe (Input) für das trainierte KI-System erfasst und eine Position und/oder Orientierung, insbesondere eine Lage, der IMU, basierend auf den eingegebenen Bewegungsdaten durch das trainierte KI-System ausgegeben. Insbesondere wird die Position und/oder Orientierung, insbesondere die Lage, der IMU an ein Navigationssystem bereitgestellt, welches die Position und/oder Orientierung etwa durch eine Ausgabevorrichtung ausgeben kann.

Die IMU ist dabei an dem motorisierten System befestigt oder angebracht. Das motorisierte System bewegt sich entlang der Trajektorie, insbesondere auf der vorbestimmten/vordefinierten Trajektorie, durch den Raum. Die IMU ist dabei also derart an dem motorisierten System angebracht, dass die IMU mithilfe des motorisierten Systems auf der Trajektorie durch den Raum bewegt werden und seine Position, insbesondere seine Position und Orientierung, ändern kann. Die IMU erfasst die gemessenen Bewegungsdaten während der Bewegung des motorisierten Systems. Bei den Bewegungsdaten handelt es sich vorzugsweise um eine Beschleunigung in jeweils drei Richtungen (a_x, a_y, a_z) und eine Orientierung der IMU um jeweils drei Richtungen, insbesondere in Form von Drehraten oder Orientierungen um drei Achsen (etwa um die Achsen X, Y, Z). Insbesondere werden also sechs einzelne Werte als Bewegungsdaten erfasst, drei Beschleunigungswerte und drei Drehratenwerte. Vorzugsweise kann ferner ein Magnetfeld durch die IMU detektiert werden.

Während die IMU durch das motorisierte System die Bewegung entlang der Trajektorie ausführt, wird zusätzlich die Position- und/oder Orientierung der IMU durch ein Trackingsystem im Raum erfasst. Das Trackingsystem stellt sozusagen die erfasste absolute Position und/oder Orientierung (auch als Positionsdaten bezeichnet) im Raum bereit. Das Trackingsystem ist ein optisches Trackingsystem. Als Resultat der Erfassung der gemessenen Bewegungsdaten und der Positionsdaten liegen zwei zeitabhängige Datensätze vor. Die Bewegungsdaten und die Positionsdaten werden derart verknüpft, dass zu den Bewegungsdaten an bestimmten Zeitpunkten oder Zeitabschnitten die entsprechende Position und/oder Orientierung zugeordnet werden. Dadurch entsteht ein verknüpfter (Trainings-)Datensatz, der die Bewegungsdaten und die entsprechenden Positionsdaten einander zuordnet.

Der verknüpfte Datensatz wird verwendet, um das KI-System zu trainieren bzw. anzulernen. Also ist der verknüpfte Datensatz der Trainingsdatensatz für das KI-System. Bei dem KI-System handelt es sich vorzugsweise um ein künstliches neuronales Netz (im engl. artifical neural network). Die Bewegungsdaten sind dabei eine Eingabe bzw. Input, und die Position und/oder Orientierung eine Ausgabe bzw. Output für das KI-System. Durch das Training des KI-Systems werden die einzelnen Gewichtungen des neuronalen Netzes derart eingestellt, das ein Zusammenhang bzw. eine Korrelation zwischen den Bewegungsdaten einerseits und den Positionsdaten andererseits ermittelt wird, ohne dass eine explizite Vorgabe gemacht werden muss. Damit ist die Trainingsphase des KI-Systems abgeschlossen. Das trainierte KI-System ist im Wesentlichen eine IMU-Kalibrierung. Das bedeutet, dass die rohen, erfassten gemessenen Bewegungsdaten durch das trainierte KI-System gewissermaßen individuell korrigiert und mit entsprechenden Positionsdaten verknüpft werden. Beispielsweise können der Einfluss der Schwerkraft und andere Störungen aus den Rohdaten entfernt werden. Das trainierte KI-Systems wird in einem nachfolgenden Schritt dann dazu verwendet, für gemessene Bewegungsdaten der IMU eine Vorhersage für die Position und/oder Orientierung der IMU im Raum abzugeben. Durch das vorliegende Verfahren bzw. das trainierte KI-System kann also die Position und/oder Orientierung der IMU aufgrund der gemessenen Bewegungsdaten der IMU sehr präzise bestimmt werden. Dabei werden insbesondere Vorhersagen für die Positionsdaten der IMU für eine oder mehrere neue Trajektorien ausgegeben, die noch nicht von dem Trackingsystem erfasst wurden.

Zusammenfassend liegt der Kern der Offenbarung darin, mithilfe der IMU gemessene Bewegungsdaten für Trajektorien zu erfassen, während die Position und/oder Orientierung gleichzeitig von dem Trackingsystem erfasst werden. Mithilfe der erfassten Daten wird das KI-System trainiert. Das trainierte KI-System kann nun aufgrund von gemessenen Bewegungsdaten entlang einer unbekannten Trajektorie die Position und/oder die Orientierung während dieser Trajektorie vorhersagen/ausgeben, ohne dass ein Positionstracking der IMU nötig ist.

Das offenbarungsgemäße Verfahren hat dabei die folgenden Vorteile. Wie vorstehend erläutert, führt die Berechnung von Position und/oder Orientierung aus Beschleunigungsdaten durch doppelte Integration zu hohen Berechnungsfehlern. Der Einfluss der Erdbeschleunigung führt zu zusätzlichem Rauschen bzw. Störungen in den erfassten Beschleunigungsdaten. Diese Probleme werden durch das offenbarungsgemäße Verfahren bzw. das trainierte KI-System gelöst. Durch das trainierte KI-System kann aus den erfassten Bewegungsdaten der IMU eine möglichst genaue Vorhersage für die Position und/oder Orientierung der IMU abgegeben werden. Durch den Lernvorgang bzw. das Training des KI-Systems können Störungen durch den Einfluss der Erdbeschleunigung und systematische Kalibrierungsfehler beseitigt/ ausgeschlossen werden. Ferner kann das KI-System auf jede einzelne IMU individuell abgestimmt werden. Auch können trainierte KI-System für eine bestimmte Klasse oder Menge von IMU's bereitgestellt werden. Durch die Beseitigung der systematischen Messfehler und die genaue Vorhersage der Position und/oder Orientierung der IMU, können kleine und kostengünstige Sensoren verwendet werden und trotzdem hinreichend gute Genauigkeiten erzielt werden. Dadurch können Kosten eingespart und der Bauraum an einem medizinischen Instrument, das mit der IMU ausgestattet wird, optimal ausgenutzt werden. Ein zusätzlicher Vorteil ist, dass es einfach, effizient und schnell ist, ausreichend Trainingsdaten für das KI-System zu generieren.

Die Aufgabe der vorliegenden Offenbarung wird ferner durch ein Trainingssystem zur Kalibrierung (und Vorhersage) von zumindest Positionsdaten der inertialen Messeinheit (IMU) gelöst. Das Trainingssystem weist dafür die zu kalibrierende IMU auf, die gemessene Bewegungsdaten erfasst und einer Steuereinheit bereitstellt. Ferner weist das Trainingssystem ein motorisiertes System auf, das dafür angepasst ist, die zu kalibrierende IMU entlang einer vordefinierten Trajektorie im Raum zu bewegen, wobei die Trajektorie eine sich ändernde Geschwindigkeit und eine sich ändernde Beschleunigung aufweist. Das Trainingssystem weist zudem ein optisches Trackingsystem mit einer oder mehreren Kameras auf, das dafür angepasst ist, eine Position und/oder Orientierung der IMU zu erfassen und der Steuereinheit bereitzustellen. Die Steuereinheit ist dafür angepasst ist, die gemessenen Bewegungsdaten mit der erfassten Position und/oder Orientierung zu verknüpfen, um einen Trainingsdatensatz zu erhalten. Das Trainingssystem weist schließlich ein KI-System auf, welches die Steuereinheit mit dem Trainingsdatensatz trainiert, um ein trainiertes KI-System für eine IMU-Kalibrierung zu erhalten.

Die IMU wird also durch das motorisierte System auf der Trajektorie bewegt. Die gemessenen Bewegungsdaten während der Bewegung werden durch die IMU erfasst. In der kontrollierten Umgebung wird auch die Position und/oder Orientierung der IMU während des Bewegens werden durch das Trackingsystem sehr genau erfasst. Die jeweiligen erfassten Daten werden von der Steuereinheit verknüpft, um den verknüpften Trainingsdatensatz zu generieren. Mit dem generierten Trainingsdatensatz wird das KI-System trainiert. Durch das offenbarungsgemäße Trainingssystem wird das KI-System derart trainiert, dass es die Bewegungsdaten der IMU kalibriert und eine möglichst gute Vorhersage für die Position und/oder Orientierung der IMU basierend auf erfassten Bewegungsdaten abgeben kann. Durch das Trainingssystem kann also ein KI-System speziell auf eine individuelle IMU oder eine Menge (fast) gleicher IMUs trainiert werden. Dieses trainierte KI-System, das insbesondere auf einem computerlesbaren Speichermedium gespeichert ist, kann dann zusammen mit der IMU für eine Anwendung in einem medizinischen Bereich, insbesondere bei einer chirurgischen Navigation, eingesetzt werden.

Ferner wird die Aufgabe der Offenbarung durch ein computerlesbares Speichermedium sowie durch ein Computerprogramm gelöst, das jeweils Befehle umfasst, die bei einer Ausführung durch einen Computer diesen veranlassen, die Verfahrensschritte des offenbarungsgemäßen Verfahrens auszuführen.

Der Begriff "Position" meint eine geometrische Position im dreidimensionalen Raum, der insbesondere mittels Koordinaten eines kartesischen Koordinatensystems angegeben wird. Insbesondere kann die Position durch die drei Koordinaten X, Y und Z angegeben werden.

Der Begriff "Orientierung" wiederum gibt eine Ausrichtung (etwa an der Position) im Raum an. Man kann auch sagen, dass durch die Orientierung eine Ausrichtung angegeben wird mit Richtungs- bzw. Drehungsangabe im dreidimensionalen Raum. Insbesondere kann die Orientierung mittels drei Winkeln angegeben werden.

Der Begriff "Lage" umfasst sowohl eine Position als auch eine Orientierung. Insbesondere kann die Lage mittels sechs Koordinaten angegeben werden, drei Positionskoordinaten X, Y und Z sowie drei Winkelkoordinaten für die Orientierung.

Die Position oder die Orientierung werden vorliegend insbesondere relativ zu einem Koordinatensystem betrachtet, vorzugsweise mit Bezug zu einem festzulegenden Koordinatensystem. Beispielsweise kann das Trackingsystem die Position und Orientierung der inertialen Messeinheit zu einem Startzeitpunkt erfassen und diese Startdaten dann als (Start-)Koordinatensystem definieren (also Positionen null, Orientierung null) und in diesem festgelegten KOS dann bei Bewegung der IMU (kontinuierlich) die Position und Orientierung nachverfolgen. Alternativ kann beispielsweise auch ein lokales KOS des Trackingsystems als KOS festgelegt werden, zu einem Startzeitpunkt die Startposition und die Startorientierung der IMU ermittelt werden und dann bei Bewegung der IMU relativ zu der Startposition und der Startorientierung die Position und Orientierung nachverfolgt werden.

Der Begriff "Drehrate" meint vorliegend, wie auch allgemein technisch bei einer Inertialen Messeinheit vorgesehen, eine Rotationsgeschwindigkeit bzw. drei Winkelgeschwindigkeiten, welche gemessen werden kann. Insbesondere ausgehend von einer Start-Orientierung (etwa der IMU) und einer (etwa zeitlich kontinuierlich) gemessenen Drehrate kann so auf eine Orientierung zu einem weiteren Zeitpunkt geschlossen werden, so dass Drehrate und Orientierung über eine funktionale Beziehung gewissermaßen miteinander verknüpft sein können.

Vorteilhafte Weiterbildungen der vorliegenden Offenbarung sind Gegenstand der Unteransprüche und werden insbesondere nachstehend erläutert.

Vorzugsweise werden in dem Schritt des Erfassens der gemessenen Bewegungsdaten zumindest eine Beschleunigung einerseits und eine Orientierung oder Drehrate andererseits erfasst. Ferner kann vorzugsweise eine Ausrichtung zu einem Magnetfeld erfasst werden. Die Beschleunigung wird durch einen oder mehrere Beschleunigungssensoren erfasst. Vorzugsweise weist die IMU drei orthogonale Beschleunigungssensoren auf, um drei Beschleunigungen in drei unterschiedliche Richtungen zu erfassen (a_x, a_y, a_z). Die Orientierungen bzw. Drehraten um die Achsen, insbesondere um die X-,Y-,Z-Achsen, wird durch ein Gyroskop, insbesondere durch drei orthogonale Gyrosensoren, erfasst. Damit weist die IMU vorzugsweise sechs Sensoren auf, drei Beschleunigungssensoren und drei Gyrosensoren. Die IMU kann auch lediglich einen Beschleunigungssensor und einen Sensor für die Orientierung aufweisen, etwa einen Gyrosensor, aufweisen. Es ist lediglich notwendig, dass die IMU die Beschleunigung in drei Richtungen und die Orientierung in bzw. um drei Richtungen erfassen kann. Durch das Erfassen dieser Bewegungsdaten kann die Bewegung der IMU ausreichend erfasst werden. Die erfassten gemessenen Bewegungsdaten sind Teil des Trainingsdatensatzes.

Vorzugsweise wird die IMU zwischen den Schritten Trainieren eines KI-Systems mit dem Trainingsdatensatz, und Erfassen von gemessenen Bewegungsdaten der IMU als Eingabe für das trainierte KI-System, auf einem medizinischen Instrument angebracht. Das heißt, die IMU wird von dem motorisierten System entfernt und auf das medizinische Instrument übertragen. Ebenso wird das trainierte KI-System auf das medizinische Instrument übertragen oder zumindest eine datentechnische Verbindung zu dem medizinischen Instrument hergestellt, so dass das medizinische Instrument auf das trainierte KI-System zugreifen kann. Wenn das medizinische Instrument bewegt wird, erfasst die IMU die Bewegungsdaten dieser Bewegung. Während eine Erfassung einer Position und/oder der IMU bei der Bewegung durch das motorisierte System möglich war, ist nun ein Erfassen der Position und/oder Orientierung der IMU während des Bewegens durch das medizinische Instrument nicht mehr durch das Trackingsystem gewollt, um Sichtproblematiken zu verhindern. Es wird daher mithilfe des trainierten KI-Systems die Position und/oder Orientierung der IMU aus den erfassten Bewegungsdaten der IMU berechnet/ geschätzt/ vorhergesagt.

Erfindungsgemäß wird in dem Schritt des Erfassens der Position und/oder Orientierung der IMU durch das Trackingsystem, die Position und/oder Orientierung der IMU durch ein optisches Trackingsystem erfasst. Das optische Trackingsystem erfasst die Position und/oder Orientierung der IMU mithilfe einer oder mehrerer Kameras. Durch das Trackingsystem kann die (globale) Position und/oder Orientierung der IMU ausreichend genau erfasst werden. Insbesondere findet dieser Schritt in einer kontrollierten Umgebung statt, in welcher etwa stets ein guter Sichtkontakt zwischen einer Kamera des optischen Trackingsystems und dem nachverfolgten IMU besteht und beispielsweise weitere starre Tracker (etwa IR-Marker) angebracht sind, um eine präzise Messung zu ermöglichen. Wenn das KI-System trainiert ist, so entfallen diese Tracker und die IMU kann in einer schwierigen Umgebung eingesetzt werden.

Vorzugsweise werden in dem Schritt des Verknüpfens die gemessenen Bewegungsdaten zu einem ersten Zeitpunkt, insbesondere zu einer Vielzahl an diskreten Zeitpunkten mit vorzugsweise definierten Zeitabständen, zu der erfassten Position und/oder Orientierung zu dem ersten Zeitpunkt zugeordnet. Sowohl die erfassten Bewegungsdaten als auch die erfasste Position und/oder Orientierung sind zeitabhängig. Durch diese Zeitabhängigkeit kann zu jedem Zeitpunkt einer Bewegung auch eine Position und/oder Orientierung zugeordnet werden. Dadurch kann der verknüpfte Trainingsdatensatz generiert werden. Insbesondere kann eine erste Position und Orientierung, also Lage zu einem ersten Zeitpunkt, und eine zweite Lage zusammen mit einer gemessenen Beschleunigung und Drehrate der IMU zu dem ersten Zeitpunkt als Datensatz verknüpft werden. Das KI-System findet durch das Training dann sozusagen selbstständig eine Verknüpfung um, basierend auf den gemessenen Bewegungsdaten von der ersten Lage auf die zweite Lage zu schließen und das Trackingsystem nachzuahmen.

Vorzugsweise weist der Schritt des Bewegens eine Bewegung der IMU durch einen Roboter auf.

Vorzugsweise erfolgen die Schritte des Erfassens der gemessenen Bewegungsdaten, des Erfassens der Position und/oder Orientierung der IMU und der Verknüpfung zu diskreten Zeitpunkten. Die Werte werden in bestimmten Zeitintervallen erfasst. Das erleichtert das Verknüpfen der erfassten Daten, da in der Theorie zwar eine kontinuierliche Messung stattfinden kann, in der Praxis jedoch stets diskrete Zeitmessungen, auch für eine entsprechende Bestimmung, Anwendung findet.

Vorzugsweise weisen die gemessenen Bewegungsdaten drei Beschleunigungswerte in drei Richtungen und drei Orientierungswerte um drei Achsen auf und das KI-System zumindest sechs Knoten in der Eingangsschicht auf. Beim Erfassen der gemessenen Bewegungsdaten der IMU werden sechs Werte ermittelt. Die Beschleunigung in drei Richtungen und die Orientierung in drei Richtungen. Da die sechs Werte als Eingabe für das KI-System fungieren, hat das KI-System vorzugsweise sechs Knoten in der Eingangsschicht. So können die Bewegungsdaten direkt und ohne vorheriges Umrechnen in das KI-System eingegeben werden.

Vorzugsweise wird als das KI-System ein künstliches neuronales Netz, insbesondere ein recurrent deep neural network, besonders bevorzugt ein Long Short Term Memory Network (LSTM-Netz) und/oder ein convolutional recurrent network, verwendet. Hierdurch kann insbesondere eine Tiefe des neuronalen Netzwerks angepasst werden und ein Training solange durchgeführt werden, bis eine hinreichend genau Gewichtung erreicht ist. Die erfassten Daten sind jeweils zeitabhängig. Die genannten künstlichen neuronalen Netze sind besonders darauf ausgelegt, mit zeitabhängigen Daten trainiert zu werden.

Erfindungsgemäß weist der Schritt des Bewegens entlang der zumindest einen Trajektorie, hier einer vordefinierten Trajektorie, vorzugsweise zumindest zwei vordefinierten Trajektorien, eine sich ändernde Geschwindigkeit und/oder sich ändernde Beschleunigung auf. Um ausreichend Trainingsdaten zu sammeln, wird die Trajektorie oder die mehreren Trajektorien mit unterschiedlichen Geschwindigkeiten, Beschleunigungen und/oder Orientierungen abgefahren.

Vorzugsweise wird in dem Schritt des Ausgebens zusätzlich zu der Position und/oder Orientierung eine (korrigierte) Geschwindigkeit und/oder eine korrigierte Beschleunigung der IMU ausgegeben. Das trainierte KI-System ist im Wesentlichen eine Kalibrierung der IMU, um von gemessenen Bewegungsdaten zumindest auf eine Position- und/oder Orientierung und ferner auf eine korrigierte (der Ist-Beschleunigung angenäherte) korrigierte Beschleunigung und ferner eine (korrigierte) Geschwindigkeit zu bestimmen und auszugeben. Durch die Kalibrierung bzw. das Filtern der rohen erfassten Bewegungswerte werden die rohen Bewegungswerte korrigiert. Konkret gibt das trainierte KI-System solche korrigierten Bewegungsdaten aus, die von Einflüssen der Erdbeschleunigung oder der Kalibrierung der Sensoren bereinigt sind. Die korrigierten Bewegungswerte können von dem KI-System ebenfalls ausgegeben werden. Dadurch hat die Steuereinheit korrigierte Werte zur Verfügung, die beliebig weiterverwendet werden können. Die Geschwindigkeit der IMU wird von dem trainierten KI-System ohne die Fehler ausgegeben, die bei einer Integration aus den rohen Beschleunigungsdaten auftreten würden. Insbesondere kann das KI-System nicht nur auf die Beziehung von Bewegungsdaten (mit Beschleunigung und Drehrate) zu Position und/oder Orientierung trainiert werden, sondern auch von Bewegungsdaten (mit Beschleunigung und Drehrate bzw. Drehrate) zu Beschleunigung und Orientierung bzw. Drehrate.

Vorzugsweise weist die ausgegebene Position und/oder Orientierung drei Positionskoordinaten und/oder drei Orientierungskoordinaten bzw. Winkelkoordinaten auf. Um die exakte Position der IMU im Raum zu kennen, müssen zumindest drei Positionskoordinaten von dem KI-System ausgegeben werden. Dasselbe gilt für die Orientierung. Um diese Werte ausgeben zu können, sollte das KI-System zumindest drei Knoten in der Ausgangschicht aufweisen. Dadurch können die Position und/oder die Orientierung direkt ausgegeben werden. Es wird keine Umrechnung der Werte benötigt. Es ist natürlich denkbar, dass das KI-System sechs Knoten in seiner Ausgangsschicht aufweist. In diesem Fall könnte das KI-System drei Orientierungen und drei Positionen ausgeben.

Vorzugsweise wird eine Bewegung entlang einer zweiten Trajektorie (unterschiedlich zu der ersten) durchgeführt. Um möglichst viele Trainingsdaten zu sammeln, wird vorzugsweise mehr als eine Trajektorie abgefahren und die Position und/oder Orientierung während der mehreren Trajektorien durch das Trackingsystem erfasst.

Vorzugsweise kann das motorisierte System ein Roboter sein, insbesondere ein Roboterarm, welche die IMU führt. Durch den Roboter kann die IMU entlang der Trajektorie bewegt werden.

Erfindungsgemäß weist das Trackingsystem ein optisches Trackingsystem auf.

Vorzugsweise werden durch die IMU die gemessenen Bewegungsdaten, zumindest eine Beschleunigung und eine Orientierung, und vorzugsweise eine Ausrichtung zu einem Magnetfeld, erfasst.

Vorzugsweise ist die IMU an dem motorisierten System angebracht und wird mit diesem auf der Trajektorie bewegt. Während des Bewegens erfasst die IMU die Bewegungsdaten.

Vorzugsweise werden durch die IMU die gemessenen Bewegungsdaten, vorzugsweise drei Beschleunigungswerte in drei Richtungen und drei Orientierungswerte um drei Achsen erfasst und das KI-System weist zumindest sechs Knoten in der Eingangsschicht auf.

Vorzugsweise werden die gemessenen Bewegungsdaten zu einem ersten Zeitpunkt von der Steuereinheit zu der erfassten Position und/oder Orientierung zu dem ersten Zeitpunkt zugeordnet. Durch die Zuordnung wird der verknüpfte Trainingsdatensatz generiert.

Vorzugsweise ist das KI-System des Trainingssystems ein künstliches neuronales Netz, insbesondere ein recurrent deep neural network, besonders bevorzugt ein Long Short Term Memory Network (LSTM-Netz) und/oder ein convolutional recurrent network. Diese Netze sind besonders dafür geeignet, zeitabhängige Daten zu verarbeiten.

Vorzugsweise hat das KI-System drei oder sechs Knoten in seiner Ausgangsschicht.

Vorzugsweise kann das medizinische Instrument ein Endoskop, vorzugsweise ein starres Endoskop, sein, welches die IMU insbesondere in einem Handgriff und/oder in einer distalen Spitzen aufweist. Die IMU erfasst die Bewegungsdaten während der Bewegung des medizinischen Instruments. Die erfassten Bewegungsdaten sind der Eingang für das trainierte KI-System. Wenn das Endoskop in eine Körperöffnung eines Patienten eingeführt und dabei bewegt wird, erfasst die IMU die Bewegungsdaten der Bewegung.

Vorzugsweise ist das medizinische Instrument ein Ganganalysesystem, welches zumindest eine IMU aufweist, insbesondere an einem Knie und/oder an einer Hüfte und/oder an einem Fuß eines Probanden. Die IMU ist derart an dem Ganganalysesystem befestigt, dass es die Bewegung des Patienten während eines Eingriffs (aktiv bewegt durch einen Arzt etwa) oder eines Probenden während des Gehens erfassen kann. Während des Gehens erfasst die IMU die Bewegungsdaten.

Vorzugsweise ist das medizinische Instrument ein beweglicher Operationsroboter, der die IMU an seiner distalen Spitze, insbesondere an einer distalen Spitze eines medizinischen Endeffektors, aufweist.

### Kurzbeschreibung der Figuren

Die Offenbarung wird nachfolgend anhand bevorzugter Ausführungsformen mithilfe von Figuren näher erläutert. Es zeigen:
- Fig. 1: eine schematische Frontansicht eines Trainingssystems gemäß einer bevorzugten Ausführungsform der vorliegenden Offenbarung, welches eine an einer distalen Spitze vorgesehene IMU von einer ersten Lage entlang einer Trajektorie in eine zweite Lage bewegt;
- Fig. 2: eine schematische Ansicht eines erfindungsgemäßen Trainingssystems mit einem optischen Trackingsystem und einer aktiv bewegten IMU;
- Fig. 3: eine schematische perspektivische Darstellung eines medizinischen Instruments gemäß einer bevorzugten Ausführungsform der vorliegenden Offenbarung in Form eines starren Endoskops;
- Fig. 4: ein Flussdiagramm eines Verfahrens einer bevorzugten Ausführungsform der vorliegenden Offenbarung;
- Fig. 5a: einen beispielhaften zeitabhängigen Verlauf eines Eingabewertes für ein KI-System; und
- Fig. 5b: zeigt einen beispielhaften zeitabhängigen Verlauf eines Ausgabewertes des KI-Systems basierend auf dem Eingabewert aus Fig. 5a.

Die Figuren sind schematischer Natur und sollen nur dem Verständnis der Offenbarung dienen. Gleiche Elemente sind mit denselben Bezugszeichen versehen. Die Merkmale der verschiedenen Ausführungsformen können untereinander ausgetauscht werden.

### Detaillierte Beschreibung der Figuren

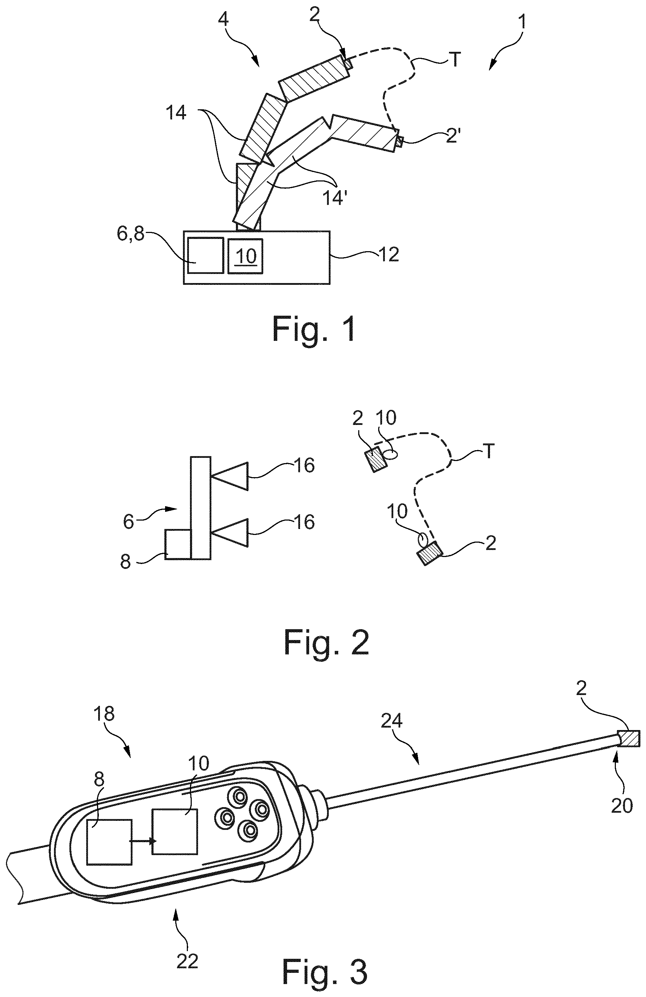

Fig. 1 zeigt eine schematische Darstellung eines Trainingssystems 1 gemäß einer bevorzugten Ausführungsform der vorliegenden Offenbarung. Das Trainingssystem 1 weist eine inertiale Messeinheit (IMU; nachstehend nur IMU genannt) 2 auf, zu welcher eine IMU-Kalibrierung und eine Zuordnung von Bewegungsdaten zu einer Position und Orientierung vorgenommen werden soll. Dafür weist das Trainingssystem 1 ein motorisiertes System 4 in Form eines Roboters auf, welches dafür angepasst ist, die IMU 2 aktiv zu bewegen. Die IMU 2 ist ein Sensorset, das Bewegungsdaten, vorzugsweise Beschleunigung und Orientierung, erfasst. Die IMU 2 weist in dieser Ausführungsform Beschleunigungs- und Gyrosensoren (nicht dargestellt) auf, um sowohl eine (dreidimensionale) Beschleunigung (in alle Raumrichtungen) als auch Drehraten um drei Achsen und damit die Orientierung der IMU 2 im Raum als gemessene Bewegungsdaten zu erfassen.

Konkret ist die IMU 2 an einer distalen Spitze des motorisierten Systems 4 befestigt. Das motorisierte System 4 bewegt die IMU 2 auf einer vordefinierten Trajektorie T durch den Raum. Während des Bewegens durch das motorisierte System 4 erfasst die IMU 2 die Bewegungsdaten zu der vordefinierten Trajektorie T. In Fig. 1 sind zwei verschiedene Lagen des Roboters zu zwei unterschiedlichen Zeiten für eine bessere Verständlichkeit unterschiedlich schraffiert dargestellt.

In einem nicht zu der beanspruchten Erfindung gehörenden Beispiel weist das Trainingssystem 1 in Fig. 1 ein Trackingsystem 6 in Form eines Mechanisch-Kinematik-basierten Trackingsystems 6 auf. Das motorisierte System 2 verfügt über Aktuatoren, hier Stellmotoren, welche sehr präzise eine Lage der IMU einstellen als auch, durch entsprechende Kenntnisse des Kinematischen Modells auch auslesen lassen. Das motorisierte System 4 ist konkret ein Roboter mit einem an einer fixen Roboterbasis 12 verbundenen beweglichen Roboterarm, der mehrere zueinander beweglichen Roboterarm-Segmenten 14 aufweist, und welche einen Gelenkwinkel zwischen den einzelnen Roboterarm-Segmenten 14 einstellen lassen. Auf diese Weise lässt sich die Position und Orientierung, also die Lage, der IMU 2 durch das roboterinterne Trackingsystem 6 messen.

Ferner weist das Trainingssystem eine Steuereinheit 8 und ein KI-System 10 auf. Sowohl die gemessenen Bewegungsdaten als auch die durch das Trackingsystem 6 erfasste Position und Orientierung wird der Steuereinheit 8 bereitgestellt. Die Steuereinheit 8 verknüpft die Bewegungsdaten, die von der IMU 2 erfasst werden und die Position und/oder Orientierung der IMU 2, die von dem Trackingsystem 6 erfasst werden, zu einem verknüpften Trainingsdatensatz. Mit diesem Trainingsdatensatz wird das KI-System 10 trainiert, um eine IMU-Kalibrierung von Bewegungsdaten zu Position und Orientierung zu erhalten. Das KI-System 10 des Trainingssystems 1 ist in dieser Ausführungsform ein künstliches neuronales Netz, konkret ein recurrent deep neural network, insbesondere ein Long Short Term Memory Network und/oder ein convolutional recurrent network. Dieses recurrent deep nreual network ist besonders gut für zeitabhängige Daten geeignet, wie sie vorliegend durch die IMU erfasst werden.

Das Trainingssystem 1 trainiert also das KI-System, indem die Steuereinheit den Roboter so ansteuert, dass dieser ein Bewegen der IMU entlang mehrerer (insbesondere vordefinierten) Trajektorien mit sich ändernden Beschleunigungen (sich damit ändernden Geschwindigkeiten), unterschiedlichen translatorischen Bewegungen in verschiedene Richtungen und Drehungen bzw. unterschiedlichen Orientierungen durchführt. Durch die Variationen in sowohl Beschleunigung, Richtung, als auch Orientierung können besonders ausführliche Trainingsdatensätze generiert werden, mit welchen das KI-System trainiert werden kann. Insbesondere wird die IMU2 lösbar an der distalen Spitze des motorisierten Systems 2 befestigt, eine oder mehrere Trajektorien solange abgefahren, bis ein hinreichend detaillierter Trainingsdatensatz für das zu trainierende KI-System erstellt wurde, und dann das trainierte KI-System insbesondere auf einem computerlesbaren Speichermedium auf der IMU gespeichert, um eine eineindeutige IMU-Kalibrierung für die einzelne IMU 2 herzustellen. Die IMU 2 wird abschließend von dem Trainingssystem 1 entfernt und kann in ein medizinisches Instrument (siehe Fig. 3) eingesetzt werden.

Auf diese Weise können nacheinander mehrere IMUs 2 gewissermaßen individuell kalibriert werden. Diese IMUs 2 zusammen mit dem zugehörigen KI-System 10 liefern hiernach eine besonders genaue individuelle Zuordnung von Bewegungsdaten zu Position und Orientierung, welche in einem chirurgischen Einsatz Verwendung finden.

Durch das Trainingssystem 1 kann also die IMU-Kalibrierung und Zuordnung von Bewegungsdaten zu Position und Orientierung, unabhängig von dem späteren Einsatzumfeld, durchgeführt werden. Wenn einmal das KI-System zu der IMU 2 trainiert ist, dann kann die IMU 2 zusammen mit dem zugehörigen KI-System 10 eingesetzt werden. Es wird damit ein zweistufiges System bereitgestellt. In der ersten Stufe erfolgt durch das Trainingssystem 1 das Trainieren des KI-Systems und damit die IMU-Kalibrierung und in der zweiten, separaten Stufe erfolgt der Einsatz der IMU mit hinreichend genau bestimmbarer Position und Orientierung auf Basis der gemessenen Bewegungsdaten, um auch ohne externes (globales) Trackingsystem eine Navigation durchzuführen. Das trainierte KI-System 10 ahmt also ein Trackingsystem nach. Dadurch ist es möglich, gänzlich ohne externes Trackingsystem eine genaue Navigation durchzuführen.

Insbesondere kann das trainierte KI-System 10 und die IMU 2 natürlich auch in ein Navigationssystem mit einem Trackingsystem integriert werden, und zusätzlich zu der durch das Trackingsystem bestimmten Position und Orientierung kann auch durch das trainierte KI-System 10 und die IMU 2 die Position und Orientierung bestimmt werden. Hierdurch kann beispielsweise bei einem optischen Trackingsystem bei einer Unterbrechung der Sichtlinie das das trainierte KI-System 10 und die IMU 2 die Position und Orientierung weiter bestimmen, und bei erneuter Etablierung einer Sichtlinie das optische Trackingsystem die Bestimmung wieder fortsetzen.

Fig. 2 zeigt eine schematische Ansicht eines Trainingssystems 1 gemäß der Erfindung.

Im Unterschied zu dem Trainingssystem 1 aus Fig. 1 weist das Trainingssystem 1 als motorisiertes System 4 und Trackingsystem 6 keinen Roboter, sondern ein allgemeines motorisiertes System (hier nicht dargestellt) und ein optisches Trackingsystem 6 auf. Dieses optische Trackingsystem 6 hat mehrere zueinander beabstandete Kameras 16, um mittels Bildanalyse des Trackingsystems 6, insbesondere durch die Steuereinheit 8, eine dreidimensionale räumliche Erfassung zu ermöglichen, insbesondere durch Triangulation. Die Kameras 16 sind derart angeordnet, dass sie die IMU 2 entlang der Trajektorie T im Raum verfolgen und (über entsprechende Bestimmung durch das Trackingsystem 6) dabei die Position und Orientierung der IMU 2 im Raum erfassen. Diese während der Bewegung erfasste Position und Orientierung wird dann der Steuereinheit 8 bereitgestellt.

Die Steuereinheit 8 verknüpft die gemessenen Bewegungsdaten, die von der IMU 2 erfasst werden und die Position und/oder Orientierung der IMU 2, die von dem Trackingsystem 6 erfasst werden, zu einem verknüpften Trainingsdatensatz. Mit dem Trainingsdatensatz wird das KI-System 10 trainiert. Das KI-System 10 ist in dieser Ausführungsform wieder ein künstliches neuronales Netz in Form eines recurrent deep neural network, insbesondere eines Long Short Term Memory Network und/oder eines convolutional recurrent network. Das zu trainierende KI-System 10 weist sechs Eingangsknoten für eine Eingabe von drei durch die IMU 2 gemessenen Beschleunigungswerten und drei gemessenen Drehraten bzw. Winkelgeschwindigkeiten auf. Ferner weist das KI-System sechs Ausgabeknoten auf, wobei drei Ausgabeknoten drei Positionskoordinaten und drei Ausgangsknoten drei Orientierungskoordinaten (hier Winkelkoordinaten) aufweisen. Die Steuereinheit 8 und das zu trainierende KI-System 10 stehen in dieser Ausführungsform über eine kabellose Datenverbindung, etwa WLAN oder Bluetooth, miteinander in Verbindung, so dass die IMU 2 und das KI-System 10 gewissermaßen ein einheitliches Modul bilden, welches isoliert zusammen später in ein medizinisches Instrument eingesetzt werden kann.

Fig. 3 zeigt eine perspektivische Ansicht eines medizinischen Instruments 18 gemäß einer bevorzugten Ausführungsform der vorliegenden Offenbarung. Das medizinische Instrument 18 ist vorliegend als starres Endoskop ausgebildet und weist an seiner distalen Spitze die IMU 2 und in einem Handgriff die Steuereinheit 8 und das trainierte KI-System 10 auf.

Wenn das medizinische Instrument 18 in Form des Endoskops im Körper eines Patienten (nicht dargestellt), bewegt wird, kann die (globale) Position der distalen Spitze 20 nicht durch ein optisches Trackingsystem eines Navigationssystems erfasst werden. Deshalb wird bei dem medizinischen Instrument die Position über die IMU 2 ermittelt, die an der distalen Spitze des medizinischen Instruments 18 angebracht ist. Die Ermittlung der Position der IMU 2 erfolgt dabei auf Basis der gemessenen Bewegungsdaten der IMU 2. Während der Bewegung des medizinischen Instruments 18 erfasst die IMU 2 die Bewegungsdaten. Die erfassten Bewegungsdaten werden der Steuereinheit 8 bereitgestellt welche sie als Eingabe für das (an die IMU 2) trainierte KI-System 10 verwendet. Das trainierte KI-System 10 gibt auf Basis der erfassten Bewegungsdaten eine Bestimmung/ Vorhersage bzw. eine sehr genaue Schätzung für die Position und/oder Orientierung der IMU 2 und damit der distalen Spitze 20 des medizinischen Instruments 18 aus. Insbesondere kann das medizinische Instrument eine durch das Trainingssystem 1 der vorliegenden Offenbarung IMU 2 mit zugehörigem trainierten KI-System 10 aufweisen.

In Fig. 3 ist das medizinische Instrument 18 als Endoskop ausgeführt. Es ist aber auch denkbar, dass das medizinische Instrument 18 als ein System für eine Ganganalyse oder als ein beweglicher Operationsroboter mit Endeffektor (jeweils nicht dargestellt) ausgeführt ist.

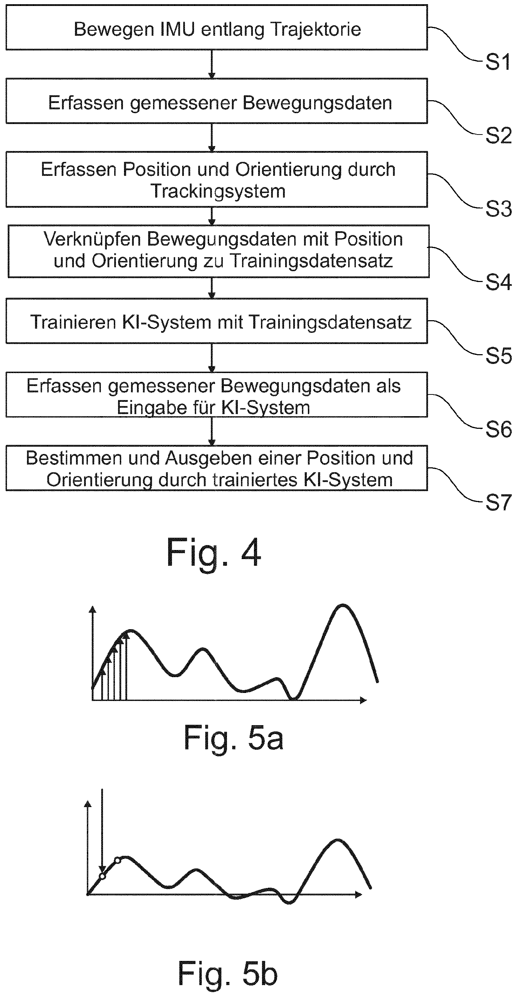

Fig. 4 zeigt ein Ablaufdiagramm/ Flussdiagramm eines Verfahrens gemäß einer bevorzugten Ausführungsform der vorliegenden Offenbarung.

In einem ersten Schritt S1 wird die IMU 2 von dem motorisierten System 4 auf der vordefinierten Trajektorie T bewegt.

Während des Bewegens der IMU 2 werden die Bewegungsdaten, hier die Beschleunigung und die Orientierung, in einem Schritt S2 von der IMU 2 erfasst.

Gleichzeitig werden in einem Schritt S3 die Position und Orientierung der IMU 2 durch das (externe) Trackingsystem 6 erfasst. Die erfassten Bewegungsdaten und die erfasste Position und Orientierung der IMU 2 werden der Steuereinheit 8 bereitgestellt.

In Schritt S4 verknüpft die Steuereinheit 8 die erfassten Bewegungsdaten und die erfasste Position und/oder Orientierung. Es wird zeitlich gesehen jeder Position und Orientierung die zugehörigen Bewegungsdaten zugeordnet. Somit wird ein Trainingsdatensatz generiert.

In einem weiteren Schritt S5 wird mit dem generierten Trainingsdatensatz das KI-System 10 trainiert. Das trainierte KI-System 10 ist im Wesentlichen eine IMU-Kalibrierung für die erfassten Bewegungsdaten um eine Zuordnung von Bewegungsdaten zu Position und Orientierung zu erhalten. Mit dem Schritt S5 ist das Trainieren des KI-Systems vorläufig oder final abgeschlossen.

Insbesondere wird die IMU 2 in einem Zwischenschritt dann an einem medizinischen Instrument 18 (siehe beispielsweise Fig. 3), wie etwa einem starren Endoskop, vorgesehen. Auch wird eine Datenverbindung des medizinischen Instruments bzw. der Steuereinheit zu dem trainierten KI-System vorgesehen. Vorzugsweise ist das trainierte System in dem medizinischen Instrument integriert.

In einem weiteren Schritt S6 werden dann durch die IMU 2 Bewegungsdaten erfasst, die vorzugsweise zu einer anderen Trajektorie, als etwa der beim Training abgefahrenen (insbesondere vordefinierten) Trajektorie T gehören. Die erfassten Bewegungsdaten sind die Eingabe für das trainierte KI-System 10. In einem letzten Schritt S7 gibt das trainierte KI-System 10 auf Basis der erfassten Bewegungsdaten die Position und Orientierung der IMU 2 aus und ahmt damit das Trackingsystem nach.

Die Figuren 5a und 5b dienen zur weiteren Erläuterung eines Zusammenhangs zwischen den Eingabe- und den Ausgabewerten des KI-Systems 10. Fig. 5a zeigt einen zeitlichen Verlauf einer Messgröße der IMU 2. In der Realität werden drei Orientierungen und drei Beschleunigungen von der IMU 2 als Bewegungsdaten erfasst und als Eingabe für das KI-System 10 verwendet. Basierend auf diesen Eingaben gibt das trainierte KI-System 10 Werte aus. Ein solcher beispielhafter Verlauf eines Ausgabewertes ist in Fig. 5b gezeigt. Zur vereinfachten Darstellung ist lediglich ein Ausgabewert dargestellt. Vorliegend kann in Fig. 5a beispielsweise eine Beschleunigung in X-Richtung gezeigt sein (a_x) und in Fig. 5b entsprechend eine Positionskoordinate in X-Richtung (r_x). Alternativ kann Fig. 5a eine Orientierung um eine Achse und Fig. 5b eine korrigierte Orientierung um die Achse zeigen. In der Realität werden drei Positionen oder drei Orientierungen ausgegeben. Die Verläufe der Eingangs- und Ausgabewerte sind zeitabhängig. Während der Bewegung der IMU 2 werden in Echtzeit neue Daten in das KI-System 10 eingegeben und basierend darauf durch das trainierte KI-System zugehörige Werte ausgegeben. Da die beiden erfassten Datensätze zeitabhängig sind, ist es also möglich, einem Satz von Bewegungsdaten zu einem bestimmten Zeitpunkt eine Position zu exakt diesem Zeitpunkt zuzuordnen.

Mit Hilfe der vorliegenden Offenbarung kann also eine (beliebige) Inertiale Messeinheit verwendet werden, die vor dem eigentlichen Einsatz mittels einem Training eines KI-Systems dahingehend kalibriert wird, so dass später das trainierte KI-System als Art Übersetzer bzw. Nachahmer eines Trackingsystems basierend auf internen Messwerten der IMU (Bewegungsdaten) zumindest eine Position und/oder Orientierung mit hinreichender Genauigkeit bestimmen kann und insbesondere globale Fehler und Abweichungen der IMU 2, etwa produktionsbedingt im Voraus eliminiert.

### Bezugszeichenliste

- 1: Trainingssystem
- 2, 2': inertiale Messeinheit (IMU)
- 4: motorisiertes System
- 6: Trackingsystem
- 8: Steuereinheit
- 10: KI-System
- 12: Roboterbasis
- 14: Glied/ Roboterarmsegment
- 16: Kamera
- 18: medizinisches Instrument
- 20: distale Spitze

- T: Trajektorie

- S1: Schritt Bewegen IMU entlang Trajektorie
- S2: Schritt Erfassen gemessener Bewegungsdaten
- S3: Schritt Erfassen Position und Orientierung durch Trackingsystem
- S4: Schritt Verknüpfen
- S5: Schritt Trainieren KI-System mit Trainingsdatensatz
- S6: Schritt Erfassen Bewegungsdaten als Eingabe für KI-System
- S7: Bestimmen und Ausgeben einer Position und Orientierung durch KI-System

## Patentansprüche

1. Verfahren zur Kalibrierung und zur Bestimmung von zumindest einer Position und/oder Orientierung einer inertialen Messeinheit (2) eines medizinischen Instruments (18), **gekennzeichnet durch** die Schritte:
- Bewegen der inertialen Messeinheit (2) durch ein motorisiertes System (4) entlang einer vordefinierten Trajektorie (T) im Raum, wobei die Trajektorie (T) eine sich ändernde Geschwindigkeit und eine sich ändernde Beschleunigung aufweist;
- Erfassen, während des Bewegens, von gemessenen Bewegungsdaten durch die inertiale Messeinheit (2) und bereitstellen der Bewegungsdaten an eine Steuereinheit (8);
- Erfassen, während des Bewegens, einer Position und/oder Orientierung der inertialen Messeinheit (2) durch ein optisches Trackingsystem (6) mit einer oder mehreren Kameras (16);
- Verknüpfen der gemessenen Bewegungsdaten zu der erfassten Position und/oder Orientierung, um einen Trainingsdatensatz zu erhalten;
- Trainieren eines KI-Systems (10) des medizinischen Instruments (18) mit dem Trainingsdatensatz, um eine IMU-Kalibrierung von Bewegungsdaten zu Position und/oder Orientierung zu erhalten;
- Erfassen von gemessenen Bewegungsdaten der inertialen Messeinheit (2) als Eingabe für das trainierte KI-System (10) des medizinischen Instruments (18), und
- Bestimmen und Ausgeben, basierend auf den eingegebenen Bewegungsdaten, einer Position und/oder Orientierung der inertialen Messeinheit (2) durch das trainierte KI-System (10).

2. Verfahren nach Anspruch 1, **dadurch gekennzeichnet, dass** in dem Schritt des Erfassens der gemessenen Bewegungsdaten zumindest eine Beschleunigung und eine Orientierung, insbesondere zumindest eine Beschleunigung und zumindest eine Drehrate, und vorzugsweise ferner eine Ausrichtung zu einem Magnetfeld, erfasst wird.

3. Verfahren nach einem der vorstehenden Ansprüche, **dadurch gekennzeichnet, dass** in dem Schritt des Verknüpfens die gemessenen Bewegungsdaten, insbesondere die Beschleunigung und Drehrate, zu einem ersten Zeitpunkt mit der erfassten Position und/oder Orientierung zu dem ersten Zeitpunkt zugeordnet werden.

4. Verfahren nach einem der vorstehenden Ansprüche, **dadurch gekennzeichnet, dass** der Schritt des Bewegens eine Bewegung der inertialen Messeinheit (2) durch einen Roboter aufweist.

5. Verfahren nach einem der vorstehenden Ansprüche, **dadurch gekennzeichnet, dass** die gemessenen Bewegungsdaten drei Beschleunigungswerte in drei Richtungen und drei Drehratenwerte oder drei Orientierungswerte um drei Achsen beinhalten und das KI-System (10) zumindest sechs Knoten in einer Eingangsschicht aufweist.

6. Verfahren nach einem der vorstehenden Ansprüche, **dadurch gekennzeichnet, dass** als das KI-System (10) ein künstliches neuronales Netz, insbesondere ein recurrent deep neural network, besonders bevorzugt ein Long Short Term Memory Network und/oder ein convolutional recurrent network, verwendet wird.

7. Verfahren nach einem der vorstehenden Ansprüche, **dadurch gekennzeichnet, dass** der Schritt des Bewegens entlang der vordefinierten Trajektorie (T), vorzugsweise zumindest zwei vordefinierten Trajektorien, erfolgt und eine sich ändernde Drehrate oder Orientierung aufweist.

8. Verfahren nach einem der vorstehenden Ansprüche, **dadurch gekennzeichnet, dass** in dem Schritt des Bestimmens und Ausgebens zusätzlich zu der Position und/oder Orientierung eine korrigierte Beschleunigung und/oder eine korrigierte Geschwindigkeit der inertialen Messeinheit (2) ausgegeben wird.

9. Trainingssystem (1) zur Kalibrierung und Bestimmung von zumindest einer Position und/oder Orientierung einer inertialen Messeinheit (2) aufweisend:
- eine zu kalibrierende inertiale Messeinheit (2), die gemessene Bewegungsdaten erfasst und einer Steuereinheit (8) bereitstellt;
- ein motorisiertes System (4), das dafür angepasst ist, die zu kalibrierende inertiale Messeinheit (2) entlang einer vordefinierten, Trajektorie (T) im Raum zu bewegen, wobei die Trajektorie (T) eine sich ändernde Geschwindigkeit und eine sich ändernde Beschleunigung aufweist;
- ein optisches Trackingsystem (6) mit einer oder mehreren Kameras (16), das dafür angepasst ist, eine Position und/oder Orientierung der inertialen Messeinheit (2) zu Erfassen und der Steuereinheit (8) bereitzustellen;
- die Steuereinheit (8), welche die gemessenen Bewegungsdaten mit der erfassten Position und/oder Orientierung verknüpft, um einen Trainingsdatensatz zu erhalten; und
- ein KI-System (10), welches durch die Steuereinheit (8) mit dem Trainingsdatensatz trainiert wird, um ein trainiertes KI-System mit einer IMU-Kalibrierung von Bewegungsdaten zu Position und/oder Orientierung zu erhalten.

10. Computerlesbares Speichermedium, das Befehle umfasst, die bei einer Ausführung durch einen Computer diesen veranlassen, die Verfahrensschritte des Verfahrens gemäß einem der Ansprüche 1 bis 8 auszuführen.

## Claims

1. A method for calibrating and determining at least one position and/or orientation of an inertial measurement unit (2) of a medical instrument (18), **characterized by** the steps of:
- moving the inertial measurement unit (2) by a motorized system (4) along a predefined trajectory (T) in space, the trajectory (T) having a changing speed and a changing acceleration;
- capturing, during the movement, measured movement data by the inertial measurement unit (2) and providing the movement data to a control unit (8);
- capturing, during the movement, a position and/or orientation of the inertial measurement unit (2) by an optical tracking system (6) including one or more cameras (16);
- linking the measured movement data to the captured position and/or orientation in order to obtain a training data set;
- training an AI system (10) of the medical instrument (18) with the training data set to obtain an IMU calibration of movement data to position and/or orientation;
- capturing measured movement data of the inertial measurement unit (2) as input to the trained AI system (10) of the medical instrument (18), and
- determining and outputting, based on the input movement data, a position and/or orientation of the inertial measurement unit (2) by the trained AI system (10).

2. The method according to claim 1, **characterized in that** in the step of capturing the measured movement data, at least one acceleration and one orientation, in particular at least one acceleration and at least one rotation rate, and preferably also an orientation with respect to a magnetic field, are captured.

3. The method according to any of the preceding claims, **characterized in that,** in the step of linking, the measured movement data, in particular the acceleration and rotation rate, are assigned to a first point in time to the captured position and/or orientation at the first point in time.

4. The method according to any of the preceding claims, **characterized in that** the step of moving comprises a movement of the inertial measurement unit (2) by a robot.

5. The method according to any of the preceding claims, **characterized in that** the measured movement data includes three acceleration values in three directions and three rotation rate values or three orientation values about three axes and the AI system (10) comprises at least six nodes in an input layer.

6. The method according to any of the preceding claims, **characterized in that** an artificial neural network, in particular a recurrent deep neural network, particularly preferably a long short-term memory network and/or a convolutional recurrent network, is used as the AI system (10).

7. The method according to any of the preceding claims, **characterized in that** the step of moving takes place along a predefined trajectory (T), preferably at least two predefined trajectories, and has a changing speed or orientation.

8. The method according to any of the preceding claims, **characterized in that** in the step of determining and outputting, in addition to the position and/or orientation, a corrected acceleration and/or a corrected speed of the inertial measurement unit (2) is output.

9. A training system (1) for calibrating and determining at least one position and/or orientation of an inertial measurement unit (2), comprising:
- an inertial measurement unit (2) to be calibrated, which captures measured movement data and provides it to a control unit (8);
- a motorized system (4) which is adapted to move the inertial measurement unit (2) to be calibrated along a predefined trajectory (T) in space, the trajectory (T) having a changing speed and a changing acceleration;
- an optical tracking system (6) including one or more cameras (16), which is adapted to capture a position and/or orientation of the inertial measurement unit (2) and to provide it to the control unit (8);
- a control unit (8) linking the measured movement data with the captured position and/or orientation to obtain a training data set; and
- an AI system (10) which is trained by the control unit (8) with the training data set to obtain a trained AI system with an IMU calibration of movement data on position and/or orientation.

10. A computer-readable storage medium comprising instructions which, when executed by a computer, cause the computer to perform the method steps of the method according to any of claims 1 to 8.

## Revendications

1. Procédé d'étalonnage et de détermination d'au moins une position et/ou orientation d'une unité de mesure inertielle (2) d'un instrument médical (18), **caractérisé par** les étapes consistant à :
- déplacer l'unité de mesure inertielle (2) par un système motorisé (4) le long d'une trajectoire prédéfinie (T) dans l'espace, dans lequel la trajectoire (T) présente une vitesse variable et une accélération variable ;
- détecter, pendant le déplacement, des données de déplacement mesurées par l'unité de mesure inertielle (2) et fournir les données de déplacement à une unité de commande (8) ;
- détecter, pendant le déplacement, une position et/ou une orientation de l'unité de mesure inertielle (2) par un système de suivi optique (6) avec une ou plusieurs caméras (16) ;
- associer les données de déplacement mesurées à la position et/ou l'orientation détectée pour obtenir un jeu de données d'entraînement ;
- entraîner un système d'IA (10) de l'instrument médical (18) avec le jeu de données d'entraînement pour obtenir un étalonnage IMU de données de déplacement par rapport à la position et/ou l'orientation ;
- détecter des données de déplacement mesurées par l'unité de mesure inertielle (2) en tant qu'entrée pour le système d'IA (10) entraîné de l'instrument médical (18), et
- déterminer et émettre, sur la base des données de déplacement entrées, une position et/ou orientation de l'unité de mesure inertielle (2) par le système d'IA entraîné (10).

2. Procédé selon la revendication 1, **caractérisé en ce que,** dans l'étape de détection des données de déplacement mesurées, au moins une accélération et une orientation, en particulier au moins une accélération et au moins un taux de rotation, et de préférence en outre un positionnement par rapport à un champ magnétique, sont détectés.

3. Procédé selon l'une quelconque des revendications précédentes, **caractérisé en ce que**, lors de l'étape d'association, les données de déplacement mesurées, en particulier l'accélération et le taux de rotation, sont affectées à un premier instant à la position et/ou l'orientation détectée au premier instant.

4. Procédé selon l'une quelconque des revendications précédentes, **caractérisé en ce que** l'étape de déplacement présente un déplacement de l'unité de mesure inertielle (2) par un robot.

5. Procédé selon l'une quelconque des revendications précédentes, **caractérisé en ce que** les données de déplacement mesurées contiennent trois valeurs d'accélération dans trois directions et trois valeurs de vitesse de rotation ou trois valeurs d'orientation autour de trois axes, et le système d'IA (10) présente au moins six nœuds dans une couche d'entrée.

6. Procédé selon l'une quelconque des revendications précédentes, **caractérisé en ce qu'**un réseau neuronal artificiel, en particulier un recurrent deep neural network, de préférence un Long Short Term Memory Network et/ou un convolutional recurrent network, est utilisé en tant que système d'IA (10).

7. Procédé selon l'une quelconque des revendications précédentes, **caractérisé en ce que** l'étape de déplacement le long de la trajectoire prédéfinie (T), de préférence au moins deux trajectoires prédéfinies, est effectuée et présente un taux de rotation ou une orientation variable.

8. Procédé selon l'une quelconque des revendications précédentes, **caractérisé en ce que,** dans l'étape de détermination et d'émission, en plus de la position et/ou l'orientation, une accélération corrigée et/ou une vitesse corrigée de l'unité de mesure inertielle (2) sont émises.

9. Système d'entraînement (1) pour étalonner et déterminer au moins une position et/ou orientation d'une unité de mesure inertielle (2), présentant :
- une unité de mesure inertielle (2) à étalonner, qui détecte des données de déplacement mesurées et les fournit à une unité de commande (8) ;
- un système motorisé (4) qui est adapté pour déplacer l'unité de mesure inertielle (2) à étalonner le long d'une trajectoire prédéfinie (T) dans l'espace, dans lequel la trajectoire (T) présente une vitesse variable et une accélération variable ;
- un système de suivi optique (6) avec une ou plusieurs caméras (16), qui est adapté pour détecter une position et/ou orientation de l'unité de mesure inertielle (2) et la fournir à l'unité de commande (8) ;
- l'unité de commande (8), laquelle associe les données de déplacement mesurées à la position et/ou l'orientation détectée pour obtenir un jeu de données d'entraînement ; et
- un système d'IA (10), lequel est entraîné par l'unité de commande (8) avec le jeu de données d'entraînement pour obtenir un système d'IA entraîné avec un étalonnage IMU de données de déplacement par rapport à la position et/ou l'orientation.

10. Support de stockage lisible par ordinateur, qui comprend des instructions qui, lorsqu'elles sont exécutées par un ordinateur, amènent celui-ci à exécuter les étapes de procédé du procédé selon l'une quelconque des revendications 1 à 8.
